# EUROPEAN PATENT APPLICATION

(11) **EP 1 213 659 A2**
(43) Date of publication of application: **12.06.2002**
(21) Application number: 01129026.9
(22) Date of filing: 06.12.2001
(51) Int. Cl.: G06F 15/02

(54) **Location/time-based reminder for personal electronic devices**

(30) Priority: 06.12.2000 US 731159
(71) Applicant: Xerox Corporation, Rochester, New York 14644 (US)
(72) Inventor: Robertson, Alan K., Rochester, New York 14623 (US)
(74) Representative: Grünecker, Kinkeldey, Stockmair & Schwanhäusser Anwaltssozietät

(57) **Abstract**

A system and method combines a positioning system, for example, the Navistar global positioning system (GPS), with a personal electronic device. The personal electronic device can be a PDA, or a mobile cellular phone, for example. The positioning system provides real-time location specific information that is converted into coordinates, such as latitude and longitude. The system and method of the present invention then references the location to a particular task stored in resident memory and activates a reminder which notifies the user of a particular task. This involves having the user input reminders which signal when the user is within a specified geographic area, or within a specified range which is in the resolution of the GPS.

## Description

The present invention relates to the art of task management. It finds particular application in connection with hand-held or otherwise portable electronic devices, e.g., a personal digital assistant (PDA), and will be described with particular reference thereto. However, it is to be appreciated that the present invention is also amenable to other like applications.

A PDA is an electronic computer typically packaged to be hand-held. A limited key pad facilitates the entry and retrieval of data and information, as well as, controlling operation of the PDA. Most PDAs also include as an input/output device a liquid crystal display (LCD) touch screen or the like and a graphical user interface (GUI). PDAs run on various platforms (e.g., Palm OS, Windows CE, etc.) and can optionally be synchronized with and/or programmed through a users desktop computer. Commercially available PDAs include the PalmPilot brand produced by Palm, Inc. of Santa Clara, California; the Visor brand produced by Handspring, Inc. of Mountain View, California; the Jornada brand produced by the Hewlett-Packard Company of Palo Alto, California; the iPAQ brand produced by the Compaq Computer Corporation of Houston, Texas; etc.

Often, PDAs support software objects and/or programming oriented to time, contact, expense and task management. For example, objects such as an electronic calendar enable a user to enter meetings, appointments and other dates of interest into a resident memory. Additionally, an internal clock/calendar is set to mark the actual time and date. In accordance with the particular protocols of the electronic calendar, the user may selectively set reminders to alert him of approaching or past events. A contact list can be used to maintain and organize personal and business contact information for desired individuals or businesses, i.e., regular mail or post office addresses, phone numbers, e-mail addresses, etc. Business expenses can be tracked with an expense report object or program. Typically, the objects are interactive with one another and/or linked to form a cohesive organizing and management tool.

Commonly, PDAs are also equipped with task or project management capabilities. For example, with an interactive task management object or software, a so called "to do" list is created, organized, edited and maintained in the resident memory of the PDA. The typical "to do" list comprises an array or series of tasks or task entries. Each entry is associated with various information or data related to the task. For example, the task may have a name or reference number or other identifying information associated therewith or assigned thereto by the user. Additionally, there may be a narrative or some other text entered to describe the task. Other common information includes: a start date, an indication of the task's status or degree of completion, the amount of time spend on the task, the tasks priority, etc.

Each task may also have associated therewith a due date or deadline, optionally, entered by the user. In similar fashion to the electronic calendar, the user may selectively set reminders to alert him that a particular due date is approaching or past. In this manner, the user is prompted to carry out the task at a specified time, preferably, prior to or on the due date. Such reminders are termed time-based reminders insomuch as they are triggered when a selected point in time or a selected date is reached.

While arguably suited for certain time sensitive tasks (i.e., tasks with defined or set due dates or deadlines), time-based reminders have limited applicability in many real world circumstances. For example, often times tasks may have no defined due date or deadline. Accordingly, a time-based reminder is of dubious value and may be set to trigger at some arbitrarily selected time which as it turns out may not be convenient. As the time was arbitrarily selected anyway, the reminder may go unheeded and completion of the task can become unduly delayed.

Additionally, it is often advantageous for a user to be reminded of a particular task when completion of that task is most convenient rather than at some pre-selected specific time and/or date. In these circumstances, time-based reminders are ineffective insomuch as a user presently scheduling a reminder may not be able to predict a specific time or date in the future when it may be convenient to complete the task. Consider a task that requires the user to be in a particular location to complete it. The task may be to call on an individual when in that individual's vicinity, e.g., to make a sales call when near by (e.g., in the same city as) a particular customer. While the task has no defined due date or deadline, the user may desire to be reminded of this task when he is near the individual or in the same city as the individual, perhaps on other business. Completion of the task when already in the vicinity may be most convenient then to the extent that it will not require a separate trip. Another example may be that the task is to pick up a prescription from the drug store. Ideally, a user wants to be reminded of this task when he is passing or near the drug store, not when he gets home and reviews his "to do" list.

The present invention contemplates a new and improved location/time-based reminder for hand-held personal electronic devices which overcomes the above-referenced problems and others.

In accordance with one aspect of the present invention, a portable electronic device is provided. The device includes an input/output means through which a user interacts with the device, and a task management application. The task management application includes a location-based reminder feature, and is supported on the device. The task management application is engaged by the user via the input/output means to selectively create task entries and selectively set associated location-based reminders therefor. The device further includes positioning means for obtaining an actual location of the device. Accordingly, each set location-based reminder is triggered when a location designated therein substantially matches the actual location obtained by the positioning means.

In accordance with a more limited aspect of the present invention, the portable electronic device a PDA, a cellular telephone or a laptop computer.

In accordance with a more limited aspect of the present invention, the positioning means includes a GPS receiver.

In accordance with a more limited aspect of the present invention, the input/output means includes a touch screen display on which a GUI is supported.

In accordance with a more limited aspect of the present invention, a location is designated for each set location-based reminder by the user selecting a corresponding location on a map output to the touch screen display.

In accordance with a more limited aspect of the present invention, triggered location-based reminders open the task entry associated therewith.

In accordance with a more limited aspect of the present invention, a snooze option is provided to the user when a location-based reminder is triggered. The snooze option, when selected, operates to reset the location based reminder such that it is again triggered when the actual location obtained by the positioning means again substantially matches the location designated in the location-based reminder.

In accordance with a more limited aspect of the present invention, a tolerance parameter is set by the user to determine when the actual location obtained from the positioning means substantially matches the designated location of the location-based reminder.

In accordance with another aspect of the present invention, a method of managing tasks for an individual, includes scheduling a task for the individual and designating a location in which the task is to be carried out. An actual location of the individual is determined, and compared to the designated location. Thereafter, the individual is reminded of the scheduled task when the actual location substantially matches the designated location.

In accordance with a more limited aspect of the present invention, the step of determining the individual's actual location is carried out using a GPS.

In accordance with a more limited aspect of the present invention, the step of scheduling the task is carried out on a portable electronic device.

In accordance with a more limited aspect of the present invention, the device is a PDA, a cellular telephone or a laptop computer.

In accordance with a more limited aspect of the present invention, reminding the individual includes providing at least one of an audible, visual or tactile indication to the individual that their actual location substantially matches the designated location.

In accordance with a more limited aspect of the present invention, the step of designating a location includes providing a map to the individual and selecting a location on the map which corresponds to the designated location.

In accordance with a more limited aspect of the present invention, the method also includes determining that the actual location substantially matches the designated location when the actual location is within a set range of the designated location.

In accordance with a more limited aspect of the present invention, the method also includes adjusting a spatial resolution of the designated location.

In accordance with another aspect of the present invention, a method includes providing a location-based reminder for a scheduled task on a portable electronic device carried by an individual. The method includes designating, on the device, a location in which the scheduled task is to be carried out by the individual, and obtaining an actual location of the device carried by the individual. The actual location is compared to the designated location. It is determined if the actual location substantially matches the designated location and a reminder is triggered on the device when the actual location substantially matches the designated location.

In accordance with a more limited aspect of the present invention, the method further includes providing, via the device, at least one of an audible, visual or tactile indication to the individual that the reminder has been triggered.

In accordance with a more limited aspect of the present invention, the step of obtaining the actual location of the device is carried out via a GPS receiver in communication with the device.

One advantage of the present invention is increased user efficiency through improved time and task management.

Another advantage of the present invention is a reduction in unnecessarily repetitive travel by consolidating tasks with the aid of location-based reminders.

Still further advantages and benefits of the present invention will become apparent to those of ordinary skill in the art upon reading and understanding the following detailed description of the preferred embodiments.

The present invention may take form in various components and arrangements of components, and in various steps and arrangements of steps. The drawings are only for purposes of illustrating preferred embodiments and are not to be construed as limiting the invention.
FIGURE 1 is diagrammatic illustration showing a PDA incorporating aspects of the present invention;
FIGURE 2 is diagrammatic illustration showing a cellular telephone incorporating aspects of the present invention; and,
FIGURE 3 is a block diagram showing the interaction of software objects and/or hardware modules supporting a task management application in a personal hand-held or otherwise portable electronic device in accordance with aspects of the present invention.

In accordance with aspects of the present invention, a task management application or object is incorporated in a personal hand-held or otherwise portable electronic device. Alternately, the task management application is implemented via software or software objects, hardware modules, or a combination of both. In any event, the task management application includes a location-based reminder feature in addition to the traditional functionality commonly incorporated with task management applications known in the art. The location-based reminder is employed to alert or notify a user carrying the device of a scheduled task to be completed in a designated location when that user is actually in the vicinity of the location.

In a preferred embodiment, the task management application runs on a user's personal hand-held device such as, e.g., a PDA, a cellular telephone, a pager, or some combination thereof. Optionally, other portable devices are contemplated such a laptop or notebook computer. The hand-held or portable device incorporates or is otherwise in communication with a module or means that pinpoints the actual location of the hand-held or portable device, and hence, the location of the user carrying the same. The pinpointing module or means preferably comprises a receiver that utilizes a satellite positioning system such as the Navistar global positioning system (GPS) to determine its location.

Optionally, depending on the particular circumstances, such as the demands for precision or the area of use, other known positioning systems are employed which may be more localized or regional, or less precise. For example, where the desired spatial resolution for a particular location is sufficiently low, e.g., where the designated location is an entire city or the like, a cellular telephone's already incorporated positioning system may suffice for purposes of pinpointing the actual location of the hand-held device. That is, the city or other general region in which the cellular telephone is operating may already be known via the hardware and/or functionality commonly incorporated in cellular telephones. In such cases, additional hardware and/or functionality for location pinpointing may not be included to the extent that it is superfluous.

In any event, one or more location-based reminders associated with task entries in a "to do" list are preferably maintained in a resident memory of the electronic device or in another appropriate storage device. In accordance with a set of particular operational protocols for the task management application, the user may selectively create, edit, open, close, cancel, organize, delete, manage and/or otherwise manipulate task entries and/or the location-based reminders. Each location-based reminder has a designated location selected or set by the user. Optionally, certain location-based reminders (e.g., those location-based reminders that are used repetitively) may be set up to have predetermined or otherwise selected default locations designated therefor. Preferably, the spatial resolution of the location is adjustable thereby allowing the user to designate a general region, a whole city, a specific block, an exact street address, a particular building, a desired latitude and longitude, etc. Additionally, tolerance parameters are selected or set by the user. Default tolerance parameters may be optionally employed. One of the tolerance parameters, nominally termed the range or primary range, defines the distance from the designated location inside which the location-based reminder is triggered. For example, where the designated location is a street address and the range is set to 5 miles, the location-based reminder is triggered anywhere inside a 5 mile radius around the designated street address.

Periodically, via the GPS receiver or other like location pinpointing device, the portable electronic device determines its actual location, and hence, the actual location of the user carrying the same. The time interval or period for the device going into a so called run mode may be user selected or otherwise set, e.g., to optimize battery usage or life while maintaining a sufficiently rapid update rate to accurately reflect the user's movements.

Once obtained, the actual location is compared to the designated locations in each location-based reminder. When the actual location matches any of the designated locations, within their respective tolerances, the corresponding reminder or reminders are triggered. Triggered reminders may optionally vibrate the portable device or beep or provide other audible and/or visual indicators to the user thereby signaling that the user is in the vicinity of a location designated for carrying out or completion of a scheduled task. Preferably, triggered reminders result in the associated task entry in the "to do" list being displayed by the portable device. The data or information from the task entry which may be displayed includes, e.g., the task name or identifier, a narrative or text describing the task, an icon associated with the task, the task's priority, the task's current status or an indication of it's degree of completion, the designated location, the task's start date, a due date or deadline, the amount of time spent on the task, etc.

Once a location-based reminder is triggered the user has the option of closing, editing, or otherwise manipulating the reminder or associated task entry in accordance with the protocols of the task management application. In a preferred embodiment, the user may optionally "snooze" the reminder in which case it would be automatically reset, and the next time the portable electronic device was carried into the vicinity of the designated location, after having left the region, the reminder would again be triggered.

In accordance with a preferred embodiment, time-based reminders are optionally combined with location-based reminders. That is, a reminder may optionally be set by the user to have both a designated location and a due date or deadline. Accordingly, the reminder would operate as a location-based reminder as detailed above, and would concurrently operate as time-based reminder in the usual manner. In this manner, even if the user does not carry the portable electronic device into the vicinity of the designated location, the reminder is still triggered at the expiration of the time period defined by the due date or deadline. This can ensure that location-based tasks are not indefinitely put off by a user who may not otherwise have occasion to enter the vicinity of the designated location. Optionally, if the reminder should trigger as a result of the time expiring, the user may be prompted to either decrease the spatial resolution of the designated location or increase the range. Consequently, the location-based reminder will then be triggered over an expanded area compared to what was previously set, and it is more likely that the user will enter the expanded area.

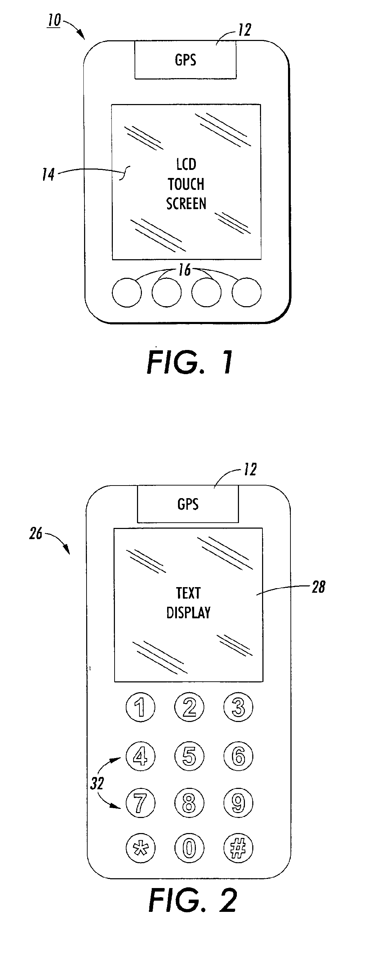

More specifically now with reference to the figures, FIGURE 1 shows a PDA **10** in accordance with aspects of the present invention. In the embodiment illustrated, a GPS receiver **12,** is incorporated as part of the PDA **10**. Alternately, the GPS receiver **12** may be an attachable or otherwise connected peripheral device. The PDA **10** has an input/output LCD touch screen **14** on which a GUI is supported. Optionally, the PDA **10** includes a stylus (not shown) which may be used to input data, information and or control commands via the LCD touch screen **14** and GUI. Additional input keys **16** also aid in the input of data and operation of the PDA **10**. In a preferred embodiment, the PDA 10 is the device on which the above described task management application resides.

Alternately, other types of personal hand-held or otherwise portable electronic devices can provide a platform for implementing the task management application in accordance with aspects of the present invention. For example, with reference to FIGURE 2, a cellular telephone **26** is shown. The cellular telephone **26** includes a limited keypad **32** for input, and a text display **28** for output. As shown, the cellular telephone **26** also incorporates a GPS receiver **12**. As with the PDA **10**, the GPS receiver **12** is optionally an attached or otherwise connected peripheral device. Moreover, as previously indicated, the GPS receiver **12** is optionally omitted from the cellular telephone **26** altogether when it's otherwise commonly incorporated reception/transmission and/or positioning system can sufficiently resolve the cellular telephone's actual location. That is to say, as is known in the art, cellular telephones have systems that allow them to connect to a telecommunications network, e.g., a cellular or personal communication system (PCS) network. These same systems may also be adapted and/or used to determine the actual location of the cellular telephone **26** rather than using the GPS receiver **12**.

In other preferred embodiments, a combined cellular telephone-PDA, a laptop or notebook computer, or other like portable electronic devices serve as the platform for the task management application. Depending on the particular input, output and other capabilities of the portable electronic device and the specific programming, the particular operational or control protocols and data entry or retrieval protocols may vary. The set of protocols used may effect the way the task entries and/or reminders are created, entered, edited, canceled, deleted, organized, managed or otherwise manipulated by the user. Additionally, the manner in which locations and tolerance parameters are designated for the location-based reminders is also dependant upon the capabilities of the portable electronic device.

For example, in the embodiment shown in FIGURE 1, location designation, when prompted, may be carried on the PDA **10** by displaying a map on the LCD touch screen **14**. The user then selects the designated location for a location-based reminder by touching the corresponding location on the map, perhaps, using the stylus. Where a region or area is desired as opposed to a single point on the map, the user may encircle or otherwise outline the region on the map. The range is also optionally selected by defining a perimeter around the designated location in a similar fashion. Optionally, a grid overlays the map, and delineations drawn on the map snap to the grid while the user outlines the region. The grid, for example, may represent latitude and longitude or an arbitrary coordinate system. In any event, either or both the grid and the map are preferably scalable to allow ease of selection of the designated location and/or range consistent with the desired spatial resolution.

On the other hand, the cellular telephone **26** shown in FIGURE 2 has a more limited means of input (i.e., the keypad **32**) and output (i.e., the display **28**, which is for the most part limited to text). In this embodiment, preferably, the data entry and operational control protocols are substantially menu driven. Location designation is carried out, when prompted, by the user entering (preferably, via the keypad **32**) a location identifier. In a preferred embodiment, the location identifier is optionally an alpha-numeric string which references a particular location or region, e.g., a zip code, a street address, a city, state and/or county name, latitude and longitude coordinates, etc. Alternately, the user may obtain the location identifier by looking it up on a printed map or in a printed atlas, optionally provided with the device. The map or atlas may be divided by pages with each page having an arbitrary grid overlay defining map coordinates. In the printed map or atlas case, the location identifier may be a combination of the page number and grid coordinates which correspond to the designated location desired.

The range, in the case of limited input and/or output devices, is preferably specified and entered by the user simply in terms of a distance within which it is desired that the location-based reminder be triggered. For example, the range may be entered by the user as X number of miles such that the location-based reminder is set to trigger when the portable electronic device is carried within X miles of the designated location.

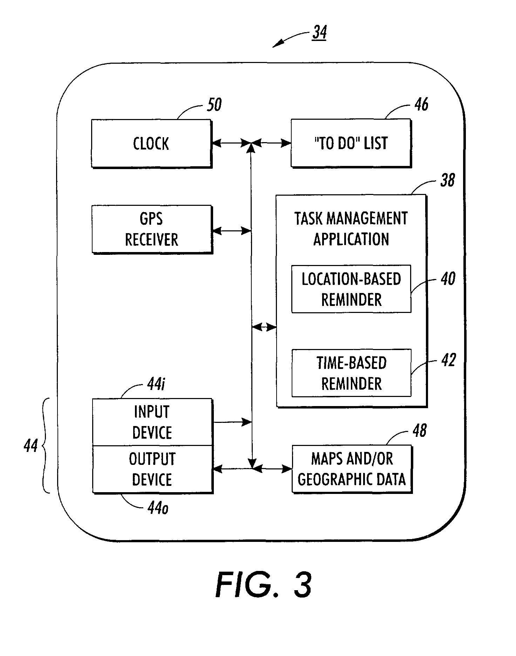

With additional reference to FIGURE 3, a block diagram shows an exemplary implementation of the task management application in accordance with aspects of the present invention. The portable electronic device **34** (e.g., the PDA **10**, the cellular telephone **12,** a laptop or notebook computer, etc.) includes an interactive combination of software objects, hardware modules, etc. employed in implementing and supporting the task management application **38.** Preferably, the task management application **38** includes both the location-based reminder feature **40**, as described above, and a time-based reminder feature **42,** as is known in the art.

Interaction with, operation of, and feedback from the portable electronic device **34** is achieved via a user interface **44** which incorporates, either jointly or separately, one or more input devices **44i** and one or more output devices **44o.** For example, the LCD touch screen **14** and keys **16** of the PDA **10** may constitute the user interface **44,** with the LCD touch screen **14** corresponding to a joint input device **44i** and output device **44o,** while the keys **16** correspond to a separate input device **44i.** In the embodiment shown in FIGURE 2, the limited text display **28** and keypad **32** of the cellular telephone **26** constitute the user interface **44,** with the display **28** corresponding to the output device **44o,** while the keypad **32** corresponds to a separate input device **44i.** Optionally, depending on the sophistication of the device **34,** the input device **44i** may include a keyboard, mouse or other known input device, and the output device **44o** may include a visual output and/or an audible output.

Using the interface **44,** a user selectively enters or creates one or more task entries via the task management application **38**. The task entries are maintained in the "to do" list database or memory **46.** Optionally, another appropriate form of storage is used, e.g., an optical or magnetic disk. The task entries optionally include data or information such as, e.g., the task's name or identifier, a narrative or text describing the task, an icon associated with the task, the task's priority, the task's current status or an indication of it's degree of completion, the task's start date, the amount of time spent on the task, etc.

For each task entry, the user may also selectively set either or both a location-based reminder and a time-based reminder in accordance with the location-based reminder feature **40** and the time-based reminder feature **42**, respectively, of the task management application **38**. The reminder data or information (i.e., designated location, tolerance parameters, due dates or deadlines, etc.) is preferably maintained in the "to do" list **46** with its respective task entries.

In accordance with the particular operational protocols and/or programming of the task management application **38**, the user is free to selectively open, close, edit, cancel, organize, delete, manage and/or otherwise manipulate the "to do" list **46** or particular task entries therein via the interface **44.**

Maps, coordinate information, geographic data or the like are maintained in a database or memory **48.** Optionally, another appropriate form of storage is used, e.g., an optical or magnetic disk. The geographic data or maps **48** are used to designate locations for location-based reminders. For example, a particular map may be displayed on the LCD touch screen **14** of the PDA **10** when the user is prompted to designate a location for a location-based reminder. The geographic data in memory **48** may also be used to relate or convert designated locations to a format consistent with the data obtained from the GPS receiver **12** such that the GPS data and designated location data may be compared to one another. Alternately, it may be the GPS data which is converted to the format of the designated location.

The actual location of the portable electronic device **34** is periodically obtained by the GPS receiver **12** or another positioning system. The actual location is compared to designated locations in the "to do" list **46** to determine if any of the location-based reminders therein have been triggered. In a similar fashion, actual or current time and date information is obtained from an internal clock **50**, and compared to due dates or deadlines in the "to do" list **46** to determine if any of the time-based reminders therein have been triggered.

When a reminder is triggered, one or more audible and/or visual indicators alerts of notifies the user thereof via the output device **44o.** Preferably, upon triggering a reminder, the associated task entry from the "to do" list is opened and displayed, e.g., on the LCD touch screen **14** or the text display **28**, and the user is prompted with various options. The options may include: simply closing the task; editing the task and/or the reminder; marking the task complete; deleting the task; etc. Note that tasks, even after being marked complete, preferably continue to be maintained in the "to do" list **46** until they are specifically deleted. In this manner, a log or historical record of tasks completed is also maintained in addition to future scheduled tasks. Optionally, completed tasks are transferred to a separate database or memory or other appropriate storage device.

Another option the user is preferably given upon triggering is to "snooze" the reminder thereby resetting it for triggering again at a future time in the case of a time-based reminder, or for triggering again upon a subsequent return to the designated location in the case of a location-based reminder. With respect to the snooze option, one annoying problem that may arise is a location-based reminder continually trigging, which may occur when the user is traveling at the border of the designated location or just near the set range. The occasional or inadvertent passing back and forth over this perimeter would keep triggering the location-based reminder each time it was reset or the snooze option selected. Accordingly, the tolerance parameters are preferably used to address this problem.

In addition to the aforementioned range, the tolerance parameters may also include a delay, for example. The delay defines a set amount of time desired between consecutive triggerings of a location-based reminder. The delay prevents the reminder from re-triggering until the amount of time specified in the delay has elapsed. In this manner, a number of passes back and forth over a triggering perimeter in a short period of time (i.e., less than the set delay) will not repeatedly trigger the reminder. In effect, the reminder will not be reset until after the delay, thereby giving the user time to leave the vicinity. Alternately or in addition, the tolerance parameters may also include a secondary range further out from the designated location than the aforementioned range (i.e., the primary range). The secondary range defines the distance which the user has to travel from the designated location to count as an exit therefrom. The user cannot "re-enter" the designated location until after the user has "left" the designated location. Therefore, until outside the secondary range the location-based reminder will not reset. In this manner, a dead-band between the primary range and the secondary range is created which prevents annoying repetitive triggers when traveling therein. delay prevents the reminder from re-triggering until the amount of time specified in the delay has elapsed. In this manner, a number of passes back and forth over a triggering perimeter in a short period of time (i.e., less than the set delay) will not repeatedly trigger the reminder. In effect, the reminder will not be reset until after the delay, thereby giving the user time to leave the vicinity. Alternately or in addition, the tolerance parameters may also include a secondary range further out from the designated location than the aforementioned range (i.e., the primary range). The secondary range defines the distance which the user has to travel from the designated location to count as an exit therefrom. The user cannot "re-enter" the designated location until after the user has "left" the designated location. Therefore, until outside the secondary range the location-based reminder will not reset. In this manner, a dead-band between the primary range and the secondary range is created which prevents annoying repetitive triggers when traveling therein.

## Claims

1. A portable electronic device, said portable electronic device comprising:
input/output means through which a user interacts with the device;
a task management application including a location-based reminder feature supported on the device, said task management application being engaged by the user via the input/output means to selectively create task entries and selectively set associated location-based reminders therefor; and,
positioning means for obtaining an actual location of the device;
wherein each set location-based reminder is triggered when a location designated therein substantially matches the actual location obtained by the positioning means.

2. The portable electronic device according to claim 1, wherein said device is selected from the group consisting of a PDA, a cellular telephone and a laptop computer.

3. The portable electronic device according to claim 1, wherein said positioning means includes a GPS receiver.

4. The portable electronic device according to claim 1, wherein said input/output means includes a touch screen display on which a GUI is supported.

5. The portable electronic device according to claim 4, wherein a location is designated for each set location-based reminder by the user selecting a corresponding location on a map output to the touch screen display.

6. The portable electronic device according to claim 1, wherein triggered location-based reminders open the task entry associated therewith.

7. The portable electronic device according to claim 6, wherein a snooze option is provided to the user when a location-based reminder is triggered, said snooze option when selected operating to reset the location based reminder such that it is again triggered when the actual location obtained by the positioning means again substantially matches the location designated in the based-based reminder.

8. The portable electronic device according to claim 1, wherein a tolerance parameter is set by the user to determine when the actual location obtained from the positioning means substantially matches the designated location of the location-based reminder.

9. A method of managing tasks for an individual, said method comprising:
(a) scheduling a task for the individual;
(b) designating a location in which the task is to be carried out;
(c) determining an actual location of the individual;
(d) comparing the actual location to the designated location; and,
(e) reminding the individual of the scheduled task when the actual location substantially matches the designated location.

10. A method of providing a location-based reminder for a scheduled task on a portable electronic device carried by an individual, said method comprising the steps of:
(a) designating, on the device, a location in which the scheduled task is to be carried out by the individual;
(b) obtaining an actual location of the device carried by the individual;
(c) comparing the actual location to the designated location;
(d) determining if the actual location substantially matches the designated location; and,
(e) triggering a reminder on the device when the actual location substantially matches the designated location.
